**Europäisches Patentamt**

**European Patent Office**

**Office européen des brevets**

(19)

(11) Veröffentlichungsnummer: **0 331 936 B1**

(12)        **EUROPÄISCHE PATENTSCHRIFT**

(45) Veröffentlichungstag der Patentschrift :
08.05.91 Patentblatt 91/19

(51) Int. Cl.$^5$ : **A23L 1/314, A23L 1/315**

(21) Anmeldenummer : **89102581.9**

(22) Anmeldetag : **15.02.89**

(54) **Verwendung einer Pastete zum Knoblauchverzehr.**

(30) Priorität : **03.03.88 DE 3806811**

(43) Veröffentlichungstag der Anmeldung :
**13.09.89 Patentblatt 89/37**

(45) Bekanntmachung des Hinweises auf die
Patenterteilung :
**08.05.91 Patentblatt 91/19**

(84) Benannte Vertragsstaaten :
**AT CH DE ES FR GB IT LI**

(56) Entgegenhaltungen :
**WO-A-85/03621
DE-A- 2 210 500
DE-A- 3 247 166**

(73) Patentinhaber : **Dora, Josef, Dr. Med.
Rohrmüllerstrasse 9
W-8897 Pöttmes (DE)**

(72) Erfinder : **Dora, Josef, Dr. Med.
Rohrmüllerstrasse 9
W-8897 Pöttmes (DE)**

(74) Vertreter : **Zeitler, Giselher, Dipl.-Ing.
Patentanwalt Herrnstrasse 15 Postfach 26 02
51
W-8000 München 26 (DE)**

EP 0 331 936 B1

# Beschreibung

Die Erfindung betrifft die Verwendung einer Pastete zum Knoblauchverzehr.

Der Verzehr von Knoblauch ist aus verschiedenen Gründen weit verbreitet und auch erwünscht. In diesem Zusammenhang ist von besonderer Bedeutung der Verzehr von Knoblauch als Vorbeugung sowie auch als wirksames Mittel gegen Gefäßerkrankungen, insbesondere gegen Gefäßverkalkung. Derartige Gefäßerkrankungen, bei denen sich die Symptome in Form von Bluthochdruck, Kopfschmerzen, Schwindel, Ohrensausen, Herzgefäßkrankheiten usw. äußern, sind nicht nur bei Menschen fortgeschrittenen Alters, sondern auch bei jüngeren Menschen weit verbreitet.

In diesem Zusammenhang ist es bekannt, als Naturheilmittel sowie als vorbeugendes Mittel frischen Knoblauch zu verzehren, wobei täglich mindestens 2 g frischer Knoblauch benötigt werden.

Demgegenüber besitzen Knoblauchdragees und -pillen naturgemäß nicht die gleiche Wirksamkeit gegen beispielsweise Arteriosklerose wie frischer Knoblauch, so daß letzterem der Vorzug zu geben ist.

Allerdings ist der längere Verzehr von frischem Knoblauch mit dem Nachteil behaftet, daß Magenbeschwerden auftreten können. Außerdem wird der nach dem Verzehr von Knoblauch auftretende typische Geruch bzw. die sich ergebende Ausdünstung häufig als unangenehm, wenn nicht sogar als unerträglich empfunden.

Der Erfindung liegt daher die Aufgabe zugrunde, ein Mittel anzugeben, das den Verzehr von frischem Knoblauch für den Magen erträglich macht und die unangenehmen Begleiterscheinungen in Form des als störend empfundenen Geruchs beseitigt.

Diese Aufgabe wird nach der Erfindung durch die in Anspruch 1 angegebenen Merkmale gelöst. Vorteilhafte Ausgestaltungen der Erfindung sind in den weiteren Ansprüchen beschrieben.

Wie sich aus Anspruch 1 ergibt, besteht die Erfindung in der Verwendung einer Pastete aus dem speziell angegebenen Gemisch zur Verbesserung der Verträglichkeit und zur Unterdrückung des Nachgeruchs von frischem Knoblauch, wobei vor dem Verzehr 25-30 g Pastete zu 2 g frischem, zerkleinertem Knoblauch gemischt werden.

Fleisch- bzw. Leberpasteten der angegebenen Art sind bekannt (DE-OS 26 39 177 und Universal-Lexikon der Kochkunst, 7. Auflage, Leipzig : Verlagsbuchhandlung von J.J. Weber, 1901, Bd. 2, Seite 23 und 25). Jedoch ergibt sich hieraus nicht die erfindungsgemäß angegebene Verwendung einer solchen bekannten Pastete in Verbindung mit frischem Knoblauch, um einerseits dessen Nachgeruch wirksam zu unterdrücken und andererseits dessen Verträglichkeit zu verbessern.

Durch die Erfindung ist gewährleistet, daß der frische Knoblauch, wenn er in der angegebenen Weise zusammen mit der Pastete vermischt verzehrt wird, für den Magen erträglich ist. Hierbei hat sich gezeigt, daß der beispielsweise vor dem Abendbrot zusammen mit der Pastete verzehrte frische Knoblauch schon nach dem Essen fast geruchsfrei und am nächsten Tag sogar vollkommen geruchlos ist.

Es wird daher insgesamt durch die Erfindung ein länger dauernder Verzehr von frischem Knoblauch ohne Magenbeschwerden und ohne unangenehmen Nachgeruch ermöglicht.

Gemäß einer bevorzugten Verwendung ist vorgesehen, daß als Milcheiweiß, das zu 10-15% in der Pastete enthalten ist, Hartkäse in Pulverform zur Anwendung gelangt.

Die Wirkung der erfindungsgemäß verwendeten Pastete wird durch Zugabe von Kräutern in der in Anspruch 3 angegebenen Menge verstärkt. Außerdem wird durch die Zugabe verschiedener Gewürze ein guter Geschmack gewährleistet.

Die Haltbarkeit der Pastete ist dadurch gesichert, daß diese in geschlossener Dose oder im Glasbehälter vorliegt. Hierbei entspricht es einer bevorzugten Ausführungsform, daß die Pastete 30 min. in Wasser gekocht wurde.

Die Pastete, die in weiterer Ausgestaltung der Erfindung einen Fettgehalt von 30 ± 5% aufweisen kann, kann je nach den verwendeten Fleischsorten und Gewürzen mit unterschiedlichen Geschmacksrichtungen versehen werden, beispielsweise mit einem Geschmack nach Hausmacherleberpastete, Kalbsleberpastete, Schinkenpastete, Bierwurst, Lionerwurst usw..

Insgesamt ist demnach aufgrund der erfindungsgemäß vorgesehenen Verwendung gewährleistet, daß bei dem Verbraucher nach dem Verzehr des frischen Knoblauchs zusammen mit der Pastete ein zunächst verringerter und dann später gar kein störender Nachgeruch, wie er sonst nach Knoblauchverzehr vorhanden ist, auftritt.

## Ansprüche

1. Verwendung einer Pastete aus einem Gemisch von

20 bis 25% Leber,
10 bis 15% Milcheiweiß und
60 bis 70% Rindfleisch und/oder Kalbfleisch und/oder Schweinefleisch und/oder Geflügelfleisch und/oder Schinken
zur Verbesserung der Verträglichkeit und zur Unterdrükkung des Nachgeruchs von frischem Knoblauch, wobei unmittelbar vor dem Verzehr 25 bis 30 g Pastete zu 2 g frischem, zerkleinertem Knoblauch gemischt werden.

2. Verwendung nach Anspruch 1, **dadurch gekennzeichnet,** daß als Milcheiweiß Hartkäse in Pulverform vorhanden ist.

3. Verwendung nach Anspruch 1 oder 2, **dadurch gekennzeichnet,** daß zusätzlich

ca. 0,08% Petersilie gerebelt und/oder
ca. 0,04% Thymian gerebelt und/oder
ca. 0,04% Basilikum gerebelt und/oder
ca. 0,04% Oregano gerebelt und/oder
ca. 0,02% Rosmarin gerebelt und/oder
verschiedene Gewürze vorhanden sind.

4. Verwendung nach einem der Ansprüche 1 bis 3, **dadurch gekennzeichnet,** daß die Pastete in geschlossener Dose oder im Glasbehälter vorliegt.

5. Verwendung nach Anspruch 4, **dadurch gekennzeichnet,** daß die Pastete 30 min in Wasser gekocht wurde.

6. Verwendung nach einem der Ansprüche 1 bis 5, **dadurch gekennzeichnet,** daß die Pastete 30 ± 5% Fettgehalt aufweist.

## Claims

1. Use of a pate consisting of a mixture of
20%-25% liver,
10%-15% milk protein and
60%-70% beef and/or veal and/or pork and/or poultry and/or ham for the improvement of the digestibility of fresh garlic and the suppression of its after-smell, where, immediately before consumption, 25 g to 30 g of pate is mixed with 2 g of fresh, comminuted garlic.

2. Use in accordance with claim 1, characterized by the fact that powdered hard cheese is used as milk protein.

3. Use accordance with claim 1 or claim 2, characterized by the fact that in addition,

approx. 0.08% rubbed parsley and/or
approx. 0.04% rubbed thyme and/or
approx. 0.04% rubbed basil and/or
approx. 0.04% rubbed oregano and/or
approx. 0.02% rubbed rosemary and/or
various spices is, or are, present.

4. Use accordance with one of claims 1 to 3, characterized by the fact that the pate is contained in a closed tin or glass jar.

5. Use in accordance with claim 4 characterized by the fact that the pate was boiled for 30 minutes in water.

6. Use in accordance with one of claims 1 to 5 characterized by the fact that the pate contains 30% ± 5% of fat.

## Revendications

1. Utilisation d'un pâté composé d'un mélange de
20 à 25% de foie,
10 à 15% de protéines de lait et
60 à 70% de viande de boeuf et/ou de viande de veau et/ou de viande de porc et/ou de viande de volaille et/ou de jambon
pour améliorer la tolérance de l'ail par l'estomac et supprimer l'odeur d'ail frais qui persiste, 25 à 30 g de pâté étant mélangés, juste avant la consommation, à 2 g d'ail frais broyé.

2. Utilisation selon la revendication 1, caractérisée en ce qu'en tant qu'albumine de lait on utilise du fromage dur sous forme de poudre.

3. Utilisation selon la revendication 1 ou 2, caractérisée en ce que l'on ajoute en outre

env. 0,08% de persil hâché et/ou
env. 0,04% de thym hâché et/ou
env. 0,04% de basilic hâché et/ou
env. 0,04% d'origan hâché et/ou
env. 0,02% de romarin hâché et/ou différentes épices.

4. Utilisation selon l'une des revendications 1 à 3, caractérisée en ce que le pâté se présente dans une boîte de conserve fermée ou dans un bocal en verre.

5. Utilisation selon la revendication 4, caractérisée en ce que le pâté a été cuit 30 minutes dans l'eau.

6. Utilisation selon l'une des revendications 1 à 5, caractérisée en ce que le pâté présente une teneur en graisses de 30 ± 5%.